# EUROPÄISCHE PATENTSCHRIFT

(11) **EP 1 302 451 B1**
(45) Veröffentlichungstag und Bekanntmachung des Hinweises auf die Patenterteilung: **29.12.2004**
(21) Anmeldenummer: 02022054.7
(22) Anmeldetag: 02.10.2002
(51) Int. Cl.: C03C 17/10, F24J 2/05

(54) **Verfahren zum Innenverspiegeln von Glasrohren, insbesondere für Sonnenkollektoren**
Method for the interior reflective coating of glass tubes, in particular for solar collectors
Méthode de revêtement miroir intérieur de tubes en verre, en particulier pour collecteurs solaires

(30) Priorität: 10.10.2001 DE 10154402
(43) Veröffentlichungstag der Anmeldung: 16.04.2003
(73) Patentinhaber: Schott AG, 55122 Mainz (DE)
(72) Erfinder: Tratzky, Stephan, Dr., 92660 Neustadt (DE); Dotzler, Heinz, 95643 Tirschenreuth (DE); Müller, Matthias, 95666 Mitterteich (DE); Pfeifer, Joachim, Dr., 95448 Bayreuth (DE); Siller, Michael, 95666 Leonberg (DE); Schulz, Leonid, 95666 Mitterteich (DE); Haas, Gottfried, 95643 Tirschenreuth (DE)
(74) Vertreter: Weitzel, Wolfgang, Dr.-Ing.

(56) Entgegenhaltungen:
- EP-A- 0 665 304
- GB-A- 2 213 257
- US-A- 4 579 107
- PATENT ABSTRACTS OF JAPAN vol. 009, no. 317 (C-319), 12. Dezember 1985 (1985-12-12) & JP 60 151253 A (MATSUSHITA DENKI SANGYO KK), 9. August 1985 (1985-08-09)

## Beschreibung

Die Erfindung betrifft ein Verfahren zum Innenverspiegeln von Glasrohren.

Allgemein bekannt sind Verspiegelungsverfahren zum Herstellen von Flachspiegeln, gekrümmten Spiegeln, Parabol-Rinnenspiegeln, Thermoskannen, Christbaumkugeln und so weiter. Hierbei wird durch Besprühen oder durch Schwenken des zu verspiegelnden Körpers mit den Reaktionslösungen die Verspiegelungsschicht aufgebracht. Dabei wird stets die gesamte Fläche des betreffenden Gegenstandes belegt.

Je nach Gegenstand sind die Anforderungen verschieden. Bei Kristallspiegeln ist zum Beispiel der Aufbau wichtig in der Reihenfolge Glas-Spiegel-Kupfer-Lack. Bei Thermoskannen hingegen ist die Optik ohne jegliches Interesse.

Besondere Anforderungen werden an Glasrohre gestellt, die verspiegelt werden und die als Vakuumröhrenkollektoren Anwendung finden. Dabei geht es darum, die Innenfläche des betreffenden Glasrohres mit einer spiegelnden Schicht zu versehen, und zwar lediglich die eine Hälfte der Innenfläche, derart, daß die spiegelnde Fläche die Gestalt einer Zylinderschale hat. Diese spiegelnde Zylinderschale erstreckt sich über die gesamte Länge des Glasrohres, oder über einen wesentlichen Teil hiervon.

Ein bekanntes Verfahren besteht darin, in das betreffende Glasrohr einen Spiegel in Gestalt einer Zylinderschale einzubringen. Dieser Spiegel besteht beispielsweise aus einem Aluminiumblech.

Die Nachteile einer solchen Lösung sind evident. Das Einbringen des Aluminiumbleches ist aufwendig. Die Arbeitsweise des fertigen, innen verspiegelten Glasrohres ist unbefriedigend.

GB-A-2 213 257 beschriebt partiell verspiegelte Glasrohre für Sonnenkollektoren.

JP-A-60 151 253 beschreibt ein Verfahren zur Maskierung von Regionen eines Glasrohres bei der Innenbeschichtung mit Silber.

Der Erfindung liegt die Aufgabe zugrunde, ein Verfahren anzugeben, mit welchem sich ein Glasrohr innen vespiegeln läßt, wobei die verspiegelte Fläche nur eine Zylinderschale ist. Dabei soll sich eine exakt definierte Trennung zwischen verspiegeltem und nicht verpiegeltem Bereich im Glasrohr ergeben. Der Spiegelrand muß scharf und geradlinig ausgebildet und parallel zur Rohrachse sein.

Weiter darf der halbseitig nicht verspiegelte Bereich (aus visuell-ästhetischen Gründen und wegen einer Verminderung der Funktionalität der ICR-Röhre) keine Fehler wie etwa Silberspritzer aufweisen.

Diese Aufgabe wird durch die Merkmale der unabhängigen Ansprüche gelöst. Dabei handelt es sich um drei verschiedene Möglichkeiten, die Erfindung zu verwirklichen - siehe die Parallelansprüche 1, 2 und 4. Dabei kann das Prinzip angewandt werden, das Glasrohr während einer gewissen Phase des Verfahrens in eine horizontale Position zu verbringen, und die jeweils notwendige Lösung in einer solchen Menge einzuführen, daß der Innenraum des Glasrohres nur teilweise ausgefüllt und demgemäß die Innenfläche des Glasrohres nur teilweise von der betreffenden Lösung behandelt wird.

Damit läßt sich ein Glasrohr auf einfache und kostengünstige Weise innen vespiegeln. Das Verfahren ist kostengünstig. Es führt zu einer scharfen und geradlinigen Trennung des Spiegelrandes. Der Spiegelrand verläuft parallel zur Längsachse des Glasrohres.

Die Rohrenden lassen sich dabei komplett spiegelfrei halten. Dies ist deshalb vorteilhaft, weil bei einer heißen Weiterverarbeitung der Rohrenden eine Verdampfung des Spiegels im Heißformbereich verhindert wird.

Mit einem verfahrensgemäß verspiegelten Glasrohr lassen sich optimale Reflexionseigenschaften erzeugen. Das Glasrohr ist frei von visuellen Fehlern, beispielsweise Salzverkrustungen oder rauhen Spiegeloberflächen. Die somit erzielte Glattheit der Spiegeloberfläche führt zu günstigen physikalischen Ergebnissen.

Die Erfindung führt zu einem ganz wichtigen Vorteil:
Die freie Verspiegelungsfläche, somit jene Fläche, die dem Glas abgewandt ist, ist durch die Erfindung in jeder Beziehung qualitativ hochwertig. Sie ist somit völlig geschlossen und glatt. Damit erfüllt sie in optimaler Weise ihre Funktionen. Sie ist auch gleichmäßig dick, über den gesamten Umfang hinweggesehen, sowie auch über die gesamte Länge.

Der Grund dürfte darin liegen, daß sich die gesamten Arbeitsvorgänge in einem geschlossenen System abspielen, nämlich innerhalb des Glasrohres, und daß die Vorgänge besser unter Kontrolle sind, als bei bekannten Verfahren.

Glasrohre, die derart verspiegelt sind, lassen sich bei Sonnenkollektoren einsetzen, ferner für die Brauchwassererwärmung sowie zur Heizungsunterstützung.

Eine bevorzugte Ausführungsform des erfindungsgemäßen Verfahrens - siehe Anspruch 1 - zur halbseitigen Silberbelegung der Innenwand eines Glasrohres läßt sich wie folgt beschreiben:

In einem möglichen ersten Schritt "Vorwärmen" wird das Glasrohr mit 80° C heißer Luft angewärmt, um auf der Glasinnenoberfläche adsorbiertes Wasser zu vertreiben. Dies ist wichtig für eine exakte Kantenausbildung des Spiegels.

In einem zweiten Schritt "Sensibilisieren" werden 650 ml Sensitizer in ein horizontal liegendes Glasrohr eingefüllt. Die Rohrenden sind mit außendichtenden Verschlußstopfen verschlossen. Der Sensitizer fließt durch eine Bohrung in einem der Verschlußstopfen. Eine korrekte Einströmgeschwindigkeit des Sensitizers ins Glasrohr und die Lage und die Ausbildung der Bohrung im Verschlußstopfen ist wichtig, da sonst Fehler durch störende Wellenbewegung in der Flüssigkeit und Spritzer auf der Glasinnenoberfläche entstehen.

Der Sensitizer besteht aus RX-Konzentrat, das 1 : 50 000 mit voll entsalztem (VE-) Wasser verdünnt wird. Dieser Verdünnungsvorgang erfolgt in zwei Stufen: einmal pro Schicht wird das RX-Konzentrat in einem 10 I-Behälter manuell 1 : 1000 mit VE-Wasser vorverdünnt. Diese Vorverdünnung wird dann für jedes einzelne Rohr in einer automatischen Misch- und Dosieranlage nochmals um den Faktor 1 : 50 mit VE-Wasser auf das erforderliche Verdünnungsverhältnis nachverdünnt.

Nach dem Einfüllen wird der Sensitizer durch Öffnen eines Ablaufs im gleichen Verschlußstopfen wieder aus dem Rohr entleert. Zuerst in horizontaler Rohrlage, dann unter Ankippen des Rohres um ca. 75°, um das Entleeren zu beschleunigen. Nach einer Wartezeit von 20 s (dies ist wichtig, um den Sensitizer weitgehend abtropfen zu lassen), wird das Rohr für den nächsten Verfahrensschritt wieder in die horizontale Lage zurückgekippt.

Im zweiten Schritt "Spülen nach Sensibilisieren" werden 500 ml VE-Wasser wie im ersten Schritt durch denselben Verschlußstopfen in das horizontal liegende Glasrohr eingefüllt und danach in der gleichen Weise wie im ersten Schritt wieder entleert, um somit Reste des Sensitizers im Glasrohr noch weiter zu verringern.

In einem dritten Schritt, dem "Verspiegeln", wird das Glasrohr horizontal ausgerichtet und beidseitig mit innenliegenden Verschlußstopfen, die in einem vorgegebenen Abstand vom Rohrende das Glasrohr gegenüber Flüssigkeit abdichten können, verschlossen. Dies ist wichtig, damit sich der Spiegel nicht bis zum Rohrende ausbildet und bei der Weiterverarbeitung Störungen verursacht.

Es werden 100 ml einer ammoniakalischen Ätznatron-Lösung, 100 ml einer Reduktions-Lösung und 100 ml einer ammoniakalischen Silbernitrat-Lösung hergestellt, in einer festgelegten Reihenfolge in meinem speziellen Mischbehälter miteinander zur Verspiegelungslösung gemischt (entscheidend ist hier ein optimales Höhe/Durchmesser-Verhältnis beim Mischbehälter, um eine optimale Vermischung zu gewährleisten) und dann sofort über eine am Auslauf des Mischbehälters angebrachte Schlauchleitung durch einen der Verschlußstopfen in das Glasrohr fließen gelassen.

Die Einströmgeschwindigkeit der Verspiegelungslösung sollte über Durchmesser des Schlauches, Durchmesser der Bohrung im Verschlußstopfen und/oder Höhendifferenz Mischbehälter-Glasrohr optimiert sein, um Spiegelfehler zu vermeiden (braune Ringe, Spritzer).

Die Verspiegelungslösung fließt ein, strömt in einer Wellenbewegung durch das Glasrohr zum gegenüberliegenden Veschlußstopfen, wird dort zurückgeworfen in Richtung des Verschlußstopfens, durch den die Verspiegelungslösung anfangs eingeströmt ist. Sobald die Welle der im Glasrohr strömenden Verspiegelungslösung diesen Verschlußstopfen wieder erreicht hat, startet ein Drehvorgang des Glasrohres um die eigene Rohrachse (Dauer 3 Minuten; der exakte Zeitpunkt des Drehbeginns kann wichtig sein, um Spiegelfehler zu vermeiden). Dabei entsteht ein etwa 100 µm starker metallischer Silberspiegel auf der Rohrinnenoberfläche durch eine chemische Reaktion der Silbersalze in der KS-Lösung mit dem Zucker in der KR-Lösung. Die KA-Lösung dient zur Konditionierung des pH-Wertes der Verspiegelungslösung.

Nach 3 Minuten Drehdauer wird die nun verbrauchte Verspiegelungslösung aus dem Glasrohr duch einseitiges Ankippen des Rohres entleert.

In einem vierten Schritt "Spülen nach Verspiegeln" wird das Glasrohr mit 1,5 I Wasser ausgespült, um bei der Weiterverarbeitung der Rohre störende Reste von Verspiegelungslösung aus dem Rohrinneren auszuwaschen.

In einem fünften Schritt wird das Glasrohr mit einem Heißluftgebläse von ca. 80° C über die Dauer von 2,5 Minuten getrocknet.

Die Innenverspiegelung wird im allgemeinen die Hälfte der inneren Mantelfläche eines Glasrohres erfassen. Dies bedeutet, daß die Spiegelfläche eine Zylinder-Halbschale ist. Es kann hiervon jedoch auch abgewichen werden. So könnte sich die Zylinderschale über einen kleineren oder über einen größeren Umfang der inneren Mantelfläche des betreffenden Glasrohres erstrecken.

Unter "Sensitizer" wird jegliches Aktivierungsmittel verstanden, mit welchem die Glasfläche vor-aktiviert werden kann, damit sie die Verspiegelungslösung annimmt.

Als Verspiegelungslösung dient im allgemeinen ein Gemisch aus amoniakalischem Nitrat, Natron und einer Reduktionslösung.

Die in den Ansprüchen aufgeführten drei Verfahren sind abwandlungsfähig. So ist beispielsweise gemäß Anspruch 1 die Innenfläche des Glasrohres mit Sensitizer-Lösung zu benetzen. Dies läßt sich auf verschiedene Weise durchführen. So kann beispielsweise das Glasrohr innen mit Sensitizer-Lösung besprüht werden. Alternativ kann aber auch das Glasrohr an beiden Enden verschlossen und in eine horizontale Position verbracht werden; sodann kann eine Sensitizer-Lösung in den Innenraum des Glasrohres in einer solchen Menge eingeführt werden, daß der Innenraum nur teilweise angefüllt ist.

Gleiches gilt bezüglich des Aufbringens einer Verspiegelungslösung.

Gleiches gilt ferner bezüglich Anspruch 2. Auch hier läßt sich das Benetzen der Innenfläche des Glasrohres auf verschiedene Weise bewirken, desgleichen das Aufbringen der Verspiegelungslösung.

Gleiches gilt natürlich auch für das Verfahren gemäß Anspruch 3.

## Patentansprüche

1. Verfahren zum Innenverspiegeln eines Glasrohres, wobei die verspiegelte Fläche eine Zylinderschale ist, mit den folgenden Merkmalen:
das Glasrohr wird an beiden Enden verschlossen;
das Glasrohr wird in eine horizontale Position verbracht;
es wird eine Sensitizer-Lösung in den Innenraum des Glasrohres in einer solchen Menge eingeführt, daß der Innenraum nur teilweise angefüllt ist;
die Sensitizer-Lösung wird nach einer gewissen Verweildauer aus dem Innenraum entfernt;
es wird eine Verspiegelungslösung in den Innenraum des Glasrohres eingeleitet, wobei die gesamte Innenfläche des Glasrohres von Verspiegelungslösung benetzt wird;
die verbrauchte Verspiegelungslösung wird aus dem Innenraum des Glasrohres entfernt.

2. Verfahren zum Innenverspiegeln eines Glasrohres, wobei die verspiegelte Fläche eine Zylinderschale ist, mit den folgenden Merkmalen:
die Innenfläche des Glasrohres wird mit einer Sensitizer-Lösung benetzt;
gegebenenfalls wird ein Überschuß von Sensitizer-Lösung aus dem Innenraum des Glasrohres entfernt;
die Innenfläche des Glasrohres wird mit einer Verspiegelungslösung benetzt;
gegebenenfalls wird ein Überschuß von Verspiegelungslösung aus dem Innenraum des Glasrohres entfernt;
das Glasrohr wird in eine horizontale Position verbracht;
die beiden Enden des Glasrohres werden verschlossen;
es wird eine Ätz-Lösung zum teilweisen Entfernen von Verspiegelungslösung in den Innenraum des Glasrohres in einer solchen Menge eingeführt, daß der Innenraum nur teilweise angefüllt ist;
die Ätz-Lösung wird nach einer gewissen Verweildauer aus dem Innenraum des Glasrohres entfernt.

3. Verfahren nach Anspruch 2, **gekennzeichnet durch** die folgenden Merkmale:
die Benetzung der Innenfläche des Glasrohres mit Sensitizer-Lösung und/oder die Benetzung der Innenfläche mit Verspiegelungslösung wird **dadurch** bewirkt, daß der Innenraum des Glasrohres mit einer Sensitizer-Lösung beziehungsweise mit einer Verspiegelungslösung angefüllt wird.

4. Verfahren zum Innenverspiegeln eines Glasrohres, wobei die verspiegelte Fläche eine Zylinderschale ist, mit den folgenden Merkmalen:
die Innenfläche des Glasrohres wird mit einer Sensitizer-Lösung benetzt;
gegebenenfalls wird überschüssige Sensitizer-Lösung aus dem Innenraum des Glasrohres abgeführt;
es wird in den Innenraum des Glasrohres eines Zylinderschale eingeführt, die jenen Teil der Innenfläche des Glasrohres abschirmt, der nicht verspiegelt werden soll;
der Innenraum des Glasrohres wird mit einer Verspiegelungslösung angefüllt;
gegebenenfalls wird überschüssige Verspiegelungslösung aus dem Innenraum des Glasrohres abgeführt.

5. Verfahren nach Anspruch 4, **dadurch gekennzeichnet, daß** zum Benetzen der Innenfläche des Glasrohres mit Sensitizer-Lösung beziehungsweise mit Verspiegelungslösung der Innenraum des Glasrohres mit Sensitizer-Lösung beziehungsweise mit Verspiegelungslösung angefüllt wird.

6. Verfahren nach einem der Ansprüche 1 bis 5, **dadurch gekennzeichnet, daß** das Glasrohr vor Beginn der Behandlung vorgewärmt wird.

7. Verfahren nach einem der Ansprüche 1 bis 5, **dadurch gekennzeichnet, daß** das Glasrohr zur Intensivierung der Benetzung mit Sensitizer-Lösung beziehungsweise mit Verspiegelungslösung beziehungsweise mit Ätz-Lösung während einer gewissen Zeitspanne in Umdrehung versetzt wird.

8. Verfahren nach einem der Ansprüch 1 bis 7, **dadurch gekennzeichnet**, da**ß** das Glasrohr zwischen der Behandlung mit unterschiedlichen Lösungen ausgespült wird.

9. Verfahren nach Anspruch 8, **dadurch gekennzeichnet**, da**ß** der Innenraum des Glasrohres nach dem Verspiegeln und gegebenenfalls nach dem Spülen mit Heißluft getrocknet wird.

10. Verfahren nach einem der Ansprüche 1 bis 9, **dadurch gekennzeichnet, daß** die Verweildauer der Sensitizer-Lösung im Innenraum des Glasrohres zwischen einer und sechzig Sekunden beträgt.

11. Verfahren nach einem der Ansprüche 1 bis 10, **dadurch gekennzeichnet, daß** die Verweildauer der Sensitizer-Lösung im Innenraum des Glasrohres zwischen zehn und dreißig Sekunden beträgt.

12. Verfahren nach einem der Ansprüche 1 bis 11, **dadurch gekennzeichnet, daß** die Verweildauer der Verspiegelungslösung im Innenraum des Glasrohres zwischen einer und zehn Minuten beträgt.

13. Verfahren nach einem der Ansprüche 1 bis 12, **dadurch gekennzeichnet, daß** die Verweildauer der Verspiegelungslösung im Innenraum des Glasrohres zwischen zwei und fünf Minuten beträgt.

14. Verfahren nach einem der Ansprüche 1 bis 13, **dadurch gekennzeichnet, daß** die zu verspiegelnde Zylinderschale eine Zylinder-Halbschale ist.

## Claims

1. A method for internal mirror-coating a glass tube, with the mirror-coated surface being a cylindrical shell, comprising the following features: the glass tube is closed off at both ends; the glass tube is brought to a horizontal position; a sensitizer solution is introduced into the inner space of the glass tube in such a quantity that the inner space is filled only partly; the sensitizer solution is removed from the inner space after a certain dwell period; a mirror-coating solution is introduced into the inner space of the glass tube, with the entire inside surface of the glass tube being wetted by the mirror-coating solution; the used mirror-coating solution is removed from the inner space of the glass tube.

2. A method for internal mirror-coating a glass tube, with the mirror-coated surface being a cylindrical shell, comprising the following features: the inner surface of the glass tube is wetted with a sensitizer solution; any excess quantity of sensitizer solution is optionally removed from the inner space of the glass tube; the inner surface of the glass tube is wetted with a mirror-coating solution; any excess quantity of mirror-coating solution is optionally removed from the inner space of the glass tube; the glass tube is brought to the horizontal position; the two ends of the glass tube are closed off; a caustic solution for the partial removal of mirror-coating solution is introduced into the inner space of the glass tube in such a quantity that the inner space is only partly filled; the caustic solution is removed from the inner space of the glass tube after a certain dwell period.

3. A method according to claim 2, **characterized by** the following features: the wetting of the inner surface with sensitizer solution and/or the wetting of the inner surface with mirror-coating solution is effected in such a way that the inner space of the glass tube is filled with a sensitizer solution or with a mirror-coating solution.

4. A method for internal mirror-coating a glass tube, with the mirror-coated surface being a cylindrical shell, comprising the following features: the inner surface of the glass tube is wetted with a sensitizer solution; any excess quantity of sensitizer solution is optionally removed from the inner space of the glass tube; it is introduced into the inner space of the glass tube of a cylinder shell which screens the part of the inner surface of the glass tube which is not to be mirror-coated; the inner space of the glass tube is filled with a mirror-coating solution; any excess mirror-coating solution is optionally removed from the inner space of the glass tube.

5. A method according to claim 4, **characterized in that** for wetting the inner surface of the glass tube with sensitizer solution or with mirror-coating solution the inner space of the glass tube is filled with sensitizer solution or with mirror-coating solution.

6. A method according to one of the claims 1 to 5, **characterized in that** the glass tube is preheated before starting the treatment.

7. A method according to one of the claims 1 to 5, **characterized in that** for the purpose of intensifying the wetting with sensitizer solution or with mirror-coating solution or with caustic solution the glass tube is made to rotate during a certain period of time.

8. A method according to one of the claims 1 to 7, **characterized in that** the glass tube is rinsed between the treatment with different solutions.

9. A method according to claim 8, **characterized in that** the inner space of the glass tube is dried with hot air after the mirror-coating and optionally after the rinsing.

10. A method according to one of the claims 1 to 9, **characterized in that** the dwell time of the sensitizer solution in the inner space of the glass tube is between one and sixty seconds.

11. A method according to one of the claims 1 to 10, **characterized in that** that the dwell time of the sensitizer solution in the inner space of the glass tube is between ten and thirty seconds.

12. A method according to one of the claims 1 to 11, **characterized in that** the dwell time of the mirror-coating solution in the inner space of the glass tube is between one and ten minutes.

13. A method according to one of the claims 1 to 12, **characterized in that** that the dwell time of the mirror-coating solution in the inner space of the glass tube is between two and five minutes.

14. A method according to one of the claims 1 to 13, **characterized in that** the mirror shell to be mirror-coated is a cylinder semi-monocoque.

## Revendications

1. Procédé pour argenter l'intérieur d'un tube en verre, la surface argentée étant une coque cylindrique, le procédé ayant les particularités suivantes:
on ferme le tube en verre à ses deux extrémités;
on met le tube en verre en position horizontale;
on introduit dans le volume interne du tube en verre une quantité de solution sensibilisatrice telle que le volume interne n'est rempli qu'en partie; on élimine la solution sensibilisatrice du volume interne après un certain temps de séjour;
on introduit dans le volume interne du tube en verre une solution d'argentage de manière à mouiller entièrement de ladite solution la totalité de la surface intérieure du tube en verre;
on élimine la solution d'argentage utilisée du volume interne du tube en verre.

2. Procédé pour argenter l'intérieur d'un tube en verre, la surface argentée étant une coque cylindrique, le procédé ayant les particularités suivantes:
on mouille la surface intérieure du tube en verre d'une solution sensibilisatrice;
on élimine le cas échéant un excès de solution sensibilisatrice du volume interne du tube en verre;
on mouille la surface intérieure du tube en verre de solution d'argentage; on élimine le cas échéant un excès de solution d'argentage du volume interne du tube en verre;
on met le tube en verre en position horizontale;
on ferme le tube en verre à ses deux extrémités;
on introduit dans le volume interne du tube en verre une solution de décapage destinée à éliminer en partie la solution d'argentage en quantité telle que le volume interne n'est rempli qu'en partie;
on élimine la solution de décapage du volume interne du tube en verre après un certain temps de séjour.

3. Procédé selon la revendication 2, **caractérisé par** les particularités suivantes:
on mouille la surface intérieure du tube en verre de solution sensibilisatrice et/ou de solution d'argentage en remplissant respectivement le volume interne du tube en verre de solution sensibilisatrice ou de solution d'argentage.

4. Procédé pour argenter l'intérieur d'un tube en verre, la surface argentée étant une coque cylindrique, le procédé ayant les particularités suivantes:
on mouille la surface intérieure du tube en verre d'une solution sensibilisatrice;
on évacue le cas échéant l'excédent de solution sensibilisatrice du volume interne du tube en verre;
on introduit dans le volume interne du tube en verre une coque cylindrique qui sert à protéger la partie de surface intérieure du tube en verre qui ne doit pas être argentée;
on remplit le volume interne du tube en verre d'une solution d'argentage; on évacue le cas échéant l'excédent de la solution d'argentage du volume interne du tube en verre.

5. Procédé selon la revendication 4, **caractérisé en ce que**, pour mouiller respectivement la surface intérieure du tube en verre de solution sensibilisatrice ou de solution d'argentage, on remplit respectivement le volume interne du tube en verre de solution sensibilisatrice ou de solution d'argentage.

6. Procédé selon l'une quelconque des revendications 1 à 5, **caractérisé en ce que** l'on préchauffe le tube en verre avant le début du traitement.

7. Procédé selon l'une quelconque des revendications 1 à 5, **caractérisé en ce que** l'on imprime au tube en verre un mouvement de rotation pendant un certain laps de temps afin d'intensifier le mouillage avec les solutions respectives de sensibilisation, d'argentage et de décapage.

8. Procédé selon l'une quelconque des revendications 1 à 7, **caractérisé en ce que** l'on rince le tube en verre avec différentes solutions pendant le traitement.

9. Procédé selon la revendication 8, **caractérisé en ce qu'**après l'argentage et le cas échéant après le rinçage on sèche à l'air chaud le volume interne du tube en verre.

10. Procédé selon l'une quelconque des revendications 1 à 9, **caractérisé en ce que** le temps de séjour de la solution de sensibilisation dans le volume interne du tube en verre est compris entre une et soixante secondes.

11. Procédé selon l'une quelconque des revendications 1 à 10, **caractérisé en ce que** le temps de séjour de la solution de sensibilisation dans le volume interne du tube en verre est compris entre dix et trente secondes.

12. Procédé selon l'une quelconque des revendications 1 à 11, **caractérisé en ce que** le temps de séjour de la solution d'argentage dans le volume interne du tube en verre est compris entre une et dix minutes.

13. Procédé selon l'une quelconque des revendications 1 à 12, **caractérisé en ce que** le temps de séjour de la solution d'argentage dans le volume interne du tube en verre est compris entre deux et cinq minutes.

14. Procédé selon l'une quelconque des revendications 1 à 13, **caractérisé en ce que** la coque cylindrique à argenter est une demi-coque cylindrique.
